# EUROPÄISCHE PATENTSCHRIFT

(11) **EP 2 924 522 B1**
(45) Veröffentlichungstag und Bekanntmachung des Hinweises auf die Patenterteilung: **25.05.2016**
(21) Anmeldenummer: 14162207.6
(22) Anmeldetag: 28.03.2014
(51) Int. Cl.: G05B 19/042

(54) **Verfahren zur Beeinflussung eines Steuerprogramms**
Method for influencing a control program
Procédé destiné à influencer un programme de commande

(43) Veröffentlichungstag der Anmeldung: 30.09.2015
(73) Patentinhaber: dSPACE digital signal processing and control engineering GmbH, 33102 Paderborn (DE)
(72) Erfinder: Hufnagel, Thorsten, 33154 Salzkotten (DE); Rolfsmeier, André, 33175 Bad Lippspringe (DE)

(56) Entgegenhaltungen:
- EP-A2- 1 205 842
- DE-A1-102004 027 033
- US-A1- 2010 287 536
- US-A1- 2011 029 946

## Beschreibung

Die Erfindung betrifft ein Verfahren zur Beeinflussung eines Steuerprogramms gemäß dem Oberbegriff des Patentanspruchs 1.

Ein Verfahren zur Beeinflussung eines Steuergerätes ist aus der Druckschrift DE 10 2004 027 033 A1 bekannt.

Elektronische Steuergeräte werden in zahlreichen komplexen technischen Systemen, insbesondere in Kraftfahrzeugen, für Regelungsaufgaben eingesetzt. Es versteht sich, dass ein Steuergeräteprogramm, im folgenden Steuerprogramm genannt, zumeist eine Vielzahl von Unterprogrammen aufweist, wobei ein typisches Steuerprogramm 10.000 und mehr Steuergerätevariablen verwendet. Mit den in den Steuergeräten implementierten Steuerprogrammen werden unter anderem Aktuatoren wie beispielweise Einspritzdüsen oder elektrische Lenkungen angesteuert, Werte von Sensoren wie beispielsweise Drehraten- oder Beschleunigungssensoren, Luftmassenmesser oder Abgassonden gelesen und die Werte bewertet und verarbeitet. Aufgrund der potentiell sicherheitskritischen Anwendungen bei vielen Steuergeräten werden an die Zuverlässigkeit und die Fehlerfreiheit des Steuerprogramms sehr hohe Anforderungen gestellt. Entsprechend ist die Entwicklung aufwändig und erfolgt in einer Vielzahl von Testreihen. Hierbei ist es wünschenswert, bereits während der Entwicklung und Nachentwicklung oder Fortentwicklung bzw. des Testes der Steuergeräte Funktionen des Steuerprogramms oder zumindest Variablen von Funktionen des Steuerprogramms zu verändern. Aus dem Stand der Technik sind zu diesem Zweck beispielsweise spezielle Servicefunktionen bekannt, die ausgestaltet sind, eine erste Funktion des Steuerprogramms zu deaktivieren und durch eine zweite, nachträglich implementierte Funktion zu ersetzen, zum Beispiel, indem von der ersten Funktion beschriebene Variablen nachträglich mit den Ausgabewerten der zweiten Funktion beschrieben werden. Die Aufrufe der Servicefunktion können entweder bereits während der Entwicklung des Steuerprogramms auf der sogenannten Quellcodeebene in den Programmcode eingefügt werden, oder sie werden nach Fertigstellung des Steuerprogramms nachträglich eingefügt.

Funktionsentwicklern und Testingenieueren, die gemäß obiger Beschreibung eine Änderung des Steuerprogramms vornehmen wollen und zu diesem Zweck zum Beispiel einen Aufruf einer Servicefunktion nachträglich in den Steuerprogrammcode einzufügen wünschen, liegt der Quellcode des Steuerprogramms oft nicht vor. Es steht in der Regel aber der Binärcode, zum Beispiel in Form einer hex- oder srec-Datei, zusammen mit der zugehörigen Steuergerätebeschreibungsdatei, zum Beispiel in Form einer ASAP2-Datei, für die Kalibrierung, Messung und Flash-Programmierung der Steuergeräte zur Verfügung. Eine Veränderung von Funktionen des Steuerprogramms, wie im letzten Abstatz beschrieben, muss dann anhand des Binärcodes des Steuerprogramms vorgenommen werden. Der mit dieser Aufgabe betraute Entwickler steht dann vor dem Problem, die zu verändernden Funktionen im Binärcode zu identifizieren. Eine auch als Parsing bezeichnete Analyse des Binärcodes erlaubt es zwar, Funktionsaufrufe und die zugehörigen Speicheradressen als solche zu erkennen, die Aufrufe lassen sich aber nicht ohne weiteres bestimmten Funktionen zuordnen. Mit anderen Worten: Es lässt sich zwar feststellen, dass an einer bestimmten Speicheradresse eine Funktion abgelegt ist, nicht aber, um welche Funktion des Steuerprogramms es sich handelt.

Aus der US 2010/0287536 A1 ist ein Verfahren bekannt, bei dem Adressen ausgewählter Datenstrukturen bei Funktionsaufrufen in einem binären Steuerprogramm ermittelt werden, die dann tabellarisch mit den dazugehörigen Namen aus der Quelldatei aufgelistet werden.

Vor diesem Hintergrund besteht die Aufgabe der Erfindung darin, ein Verfahren anzugeben, das den Stand der Technik weiterbildet.

Die Aufgabe wird durch ein Verfahren zur Beeinflussung eines Steuerprogramms mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Verfahren zur Beeinflussung eines als binärer Programmcode vorliegenden Steuerprogramms für ein Steuergerät bereitgestellt, wobei das Steuerprogramm eine Vielzahl von ersten Funktionen und den ersten Funktionen zugeordneten Unterprogrammen aufweist und wenigstens eine der ersten Funktionen für die Steuerung eines Aktuators ausgebildet ist, und das Steuergerät einen ersten Speicher zur Aufnahme des Steuerprogramms aufweist, wobei in dem Programmcode des Steuerprogramms bei dem Aufruf von einer der ersten Funktionen eine Sprungadresse vorliegt und die Sprungadresse auf eine Speicheradresse der mit dem Funktionsaufruf verbundenen ersten Funktion zeigt und die aufgerufene erste Funktion bzw. das ihr zugeordnete Unterprogramm als eine Abfolge von binärem Programmcode vorliegt und an dem Ende der Abfolge des Programmcodes ein Rücksprungbefehl mit einer dem Rücksprungbefehl zugeordneten Rücksprungadresse vorliegt, und wobei die Abfolge des Programmcodes der aufgerufenen ersten Funktion eine erste Anzahl von Variablenzugriffen, d.h. Schreib- und/oder Lesezugriffen auf Variablen, enthält und jedem Variablenzugriff eine Speicheradresse zugeordnet ist, und wobei mindestens einer Variablen ein erster Wert zugeordnet wird, wobei das Steuerprogramm auf das Auftreten von Funktionsaufrufen untersucht wird und die Adressen der Funktionsaufrufe ermittelt werden und der Programmcode der ersten Funktionen auf Variablenzugriffen untersucht wird sowie die Adressen der mit den jeweiligen ersten Funktionen verbundenen gelesenen und geschriebenen Variablen ermittelt werden und die ermittelten ersten Funktionen und die den jeweiligen ersten Funktionen zugeordneten Variablenadressen mit den mit den ersten Funktionsaufrufen verbundenen Sprungadressen in einer ersten Zuordnungstabelle gespeichert werden, und aus einem Vergleich der ersten Zuordnungstabelle mit einer vorgegebenen zweiten Zuordnungstabelle wenigstens einem Teil der ersten Funktionen Funktionsnamen zugeordnet werden und wenigstens ein erster Wert einer der Variablen durch einen zweiten Wert ersetzt wird. Erfindungsgemäß enthält die vorgegebene zweite Zuordnungstabelle zumindest eine Zuordnung von Variablen des Steuerprogramms zu ihren Speicheradressen sowie eine Zuordnung von Funktionen des Steuerprogramms zu den Variablen, auf die aus einer jeweiligen Funktion heraus zugegriffen wird.

Es sei angemerkt, dass die mit den ersten Funktionen verbundenen Sprungadressen zusätzlich in der ersten Zuordnungstabelle gespeichert werden. Desweiteren sei angemerkt, dass vorliegend der Begriff beeinflussen mit dem Begriff abändern gleichgesetzt wird. Desweiteren wird vorliegend unter dem Ändern des Programms insbesondere auch das Ändern mindestens einer Variablen verstanden, insbesondere einer Variablen, die die Funktion eines Aktuators beeinflusst. Das Ändern einer Variablen kann erfindungsgemäß durch einen direkten Zugriff auf die der Variablen zugeordneten Speicheradresse geschehen. Das Ändern einer Variablen kann erfindungsgemäß weiterhin durch Änderung einer Beschreibungsvorschrift im Code des Steuerprogramms geschehen, insbesondere derart, dass die Funktion, die die Beschreibungsvorschrift für die Variable enthält, deaktiviert und durch eine andere Funktion mit einer anderen Beschreibungsvorschrift für die Variable ersetzt wird. Das Ändern einer Variablen kann erfindungsgemäß weiterhin derart geschehen, dass ein Schreibzugriff auf die Variable im Code des Steuerprogramms deaktiviert wird.

Ein Vorteil des erfindungsgemäßen Verfahrens ist es, dass ohne Kenntnis des Programmcodes und / oder des Quellcodes das Steuerprogramm eines Steuergeräts auf einfache Weise änderbar bzw. beeinflussbar ist. Insbesondere erlaubt es das erfindungsgemäße Verfahren, vorgegebene Funktionen im Binärcode des Steuerprogramms zu identifizieren und in der Folge zu verändern oder zu ersetzen. Hierzu wird mittels des vorliegenden erfindungsgemäßen Verfahrens ermittelt, welche Funktionsnamen mit den den Funktionsnamen zugeordneten Variablen welchen Sprungadressen von im Binärcode des Steuerprogramms gefundenen Funktionsaufrufen zugehörig sind.

Insbesondere lassen sich auch Steuerprogramme von bereits verbauten Steuergeräten nachträglich beeinflussen. Hierzu lassen sich die vorhandenen Schnittstellen verwenden, insbesondere anhand eines dazu vorgesehenen Beeinflussungsgeräts, beispielsweise eines dSPACE DCI-GSI2. Ein weiterer Vorteil ist, dass durch eine Identifikation der in dem Programm vorhandenen ersten Funktionen eine Kenntnis des Programmcodes oder das Vorhandensein einer vollständigen Dokumentation der ersten Funktionen in vielen Fällen nicht notwendig ist. Insbesondere, wenn die grundlegende Funktionalität einer bestimmten Funktion sowie die durch diese Funktion beschriebenen und ausgelesenen Variablen bekannt sind, ist es möglich, die Funktion mittels eines im Stand der Technik als Funktionsbypassing bekannten Verfahrens zu deaktivieren und durch eine andere Funktion ähnlicher Funktionalität zu ersetzen, vorausgesetzt, die Speicheradresse der zu ersetzenden Funktion im Binärcode des Steuerprogramms ist bekannt. Mittels des Verfahrens werden die ersten Funktionen im Binärcode bzw. deren Adressen und die Adressen der in ihnen gelesenen sowie geschriebenen Variablen ermittelt und in einer ersten Zuordnungstabelle gespeichert. Aus dem Vergleich mit einer vorgegebenen zweiten Zuordnungstabelle lassen sich den Speicheradressen der aufgefundenen ersten Funktionen Funktionsnamen zuordnen.

In einer Weiterbildung wird bei der Untersuchung des Programmcodes des Steuerprogramms bei den jeweiligen Variablen ein zugeordneter Lesezugriff und ein zugeordneter Schreibzugriff ermittelt und in die erste Zuordnungstabelle gespeichert. Bei dem Vergleich der ersten Zuordnungstabelle mit der zweiten vorgegebenen Zuordnungstabelle wird die Übereinstimmung der den Variablen zugeordneten Lesezugriffe und zugeordneten Schreibzugriffe untersucht. Hierbei ist es vorteilhaft, den Grad der Übereinstimmung mittels einer Anzeigeeinheit darzustellen.

In einer anderen Weiterbildung sind in der zweiten Zuordnungstabelle einer jeden ersten Funktion jeweils ein Funktionsname und eine bestimmte Anzahl von Variablen zugeordnet, wobei jede Variable einen Namen und eine Speicheradresse aufweist und bei dem Vergleich für die in der ersten Zuordnungstabelle abgespeicherten ersten Funktionen Funktionsnamen in Abhängigkeit des Grades der Übereinstimmung wenigstens hinsichtlich der Anzahl und Namen der in beiden Zuordnungstabellen unter der jeweilig ersten Funktion abgespeicherten Variablen zugewiesen werden und der Grad der Übereinstimmung dargestellt wird. Es ist vorteilhaft, die Zuweisung der Funktionsnamen nur bei der vollständigen Übereinstimmung oder nur bei einer oberhalb eines Schwellenwertes liegenden Übereinstimmung automatisch durchzuführen.

In einer Ausführungsform wird bei einer unvollständigen Übereinstimmung hinsichtlich der Anzahl und Namen der Variablen zwischen der ersten Zuordnungstabelle und der zweiten Zuordnungstabelle anstelle einer automatischen Zuweisung des Funktionsnamens eine manuelle Zuweisung durchgeführt. Hierzu können beispielsweise in einer Anzeigeeinheit die ermittelten ersten Funktionen mit der aufgefundenen Anzahl und Namen der Variablen und die in der zweiten Zuordnungstabelle aufgelisteten aufgefundenen Anzahl und Namen der Variablen vergleichend dargestellt werden. Es kann auch in der gleichen Anzeigeeineheit für jede erste Funktion eine den Grad der Übereinstimmung charakterisierende Kenngröße angezeigt werden, beispielsweise in Form einer prozentualen Übereinstimmung.

In einer vorteilhaften Ausgestaltung der Erfindung wird eine Heuristik angewendet, wenn zu einem in dem Steuerprogramm gefundenen Funktionsaufruf kein Funktionsname mit identischer Anzahl und Namen von Variablen zu finden ist. Es ist vorteilhaft, dem Anwender den Funktionsnamen mit der größten Übereinstimmung mitzuteilen. In einer anderen vorteilhaften Ausgestaltung wird ein Hinweis ausgegeben, wenn keine vollständige Übereinstimmung vorliegt und der Grad der Übereinstimmung mitgeteilt. Eine derartige Heuristik ist vorteilhaft, weil in der Praxis die erste und die zweite Zuordnungstabelle inhaltlich voneinander abweichen können, insbesondere derart, dass Funktionen zugeordnete Variablen oder Funktionsaufrufe vereinzelt falsch zugeordnet oder zugeordnete Variablen oder Funktionsaufrufe teilweise nicht dokumentiert sind bzw. bei der Analyse des Binärcodes übersehen wurden.

In einer bevorzugten Ausführungsform wird nur dann eine Ausgabe durchgeführt, wenn bei dem Vergleich der Grad der Übereinstimmung einen vorgebbaren Schwellenwert übersteigt. Anders ausgedrückt, in der Anzeigeeinheit werden nur erste Funktionen dargestellt, wenn der Grad der Übereinstimmung bei Anzahl und Namen von Variablen bei dem Vergleich zwischen den beiden Zuordnungstabellen den Schwellenwert übersteigt. Vorzugsweise beträgt der Schwellenwert mindestens 50%, höchst vorzugsweise mindestens 80%.

In einer anderen Ausführungsform wird mittels des Beeinflussungsgerätes eine Nachricht ausgegeben, wenn bei dem Vergleich der beiden Zuordnungstabellen für keine der bei der Untersuchung des Steuerprogramms ersten Funktionen eine vollständige Übereinstimmung ermittelt wird.

In einer weiteren bevorzugten Ausführungsform wird einer Funktion nur dann automatisch ein Funktionsname zugewiesen, wenn bei dem Vergleich der Grad der Übereinstimmung einen Schwellenwert übersteigt. In einer möglichen Ausgestaltung wird einer Funktion genau dann automatisch ein Funktionsname zugewiesen, wenn bei dem Vergleich der Grad der Übereinstimmung einen vorgegebenen oder vorgebbaren Schwellenwert übersteigt. In einer weiteren möglichen Ausgestaltung wird einer Funktion genau dann automatisch ein Funktionsname zugewiesen, wenn bei dem Vergleich der Grad der Übereinstimmung einen ersten Schwellenwert überschreitet und gleichzeitig der Grad der Übereinstimmung des nächstbestübereinstimmen Funktionsnamens einen zweiten Schwellenwert unterschreitet. In einer weiteren möglichen Ausgestaltung wird einer Funktion genau dann automatisch ein Funktionsname zugewiesen, wenn bei dem Vergleich der Grad der Übereinstimmung der Funktion einen vorgegebenen oder vorgebbaren ersten Schwellenwert überschreitet und gleichzeitig die Differenz zwischen dem Grad der Übereinstimmung der Funktion und dem Grad der Übereinstimmung der nächstbestübereinstimmenden Funktion einen vorgegebenen oder vorgebbaren zweiten Schwellenwert überschreitet.

In einer weiteren Ausgestaltung wird das Ergebnis des Vergleichs anhand einer Gegenprobe verifiziert. Dazu wird vor der Zuweisung eines Funktionsnamens an eine Funktion ein Vergleich des Funktionsnamens mit allen weiteren Funktionen des Steuerprogramms durchgeführt und gemäß dem erfindungsgemäßen Verfahren ein Grad der Übereinstimmung ermittelt, und eine automatische Zuweisung des Funktionsnamens an die Funktion findet nur dann statt, wenn der Grad der Übereinstimmung für keine der weiteren Funktionen einen vorgegebenen oder vorgebbaren Schwellenwert überschreitet.

In einer vorteilhaften Ausgestaltung der Erfindung enthält die zweite Zuordnungstabelle weiterhin eine Zuordnung von ersten Funktionen zu aus einer jeweiligen ersten Funktion aufgerufenen weiteren ersten Funktionen, insbesondere derart, dass die zweite Zuordnungstabelle zumindest einem Teil der ersten Funktionen des Steuerprogramms einen Funktionsbaum zuordnet, der die aus der ersten Funktion heraus aufgerufenen Funktionen, die wiederum aus den aufgerufenen Funktionen heraus aufgerufenen Funktionen usw. auflistet. Wenn zumindest ein Teil der aus der ersten Funktion unmittelbar oder mittelbar aufgerufenen Funktionen anhand des erfindungsgemäßen Verfahrens bereits identifiziert ist, kann einem noch nicht identifizierten Funktionsaufruf auf diese Weise in der ersten Zuordnungstabelle ein Funktionsbaum zugeordnet und ein Vergleich mit einem oder mehreren in der zweiten Zuordnungstabelle aufgeführten Funktionsbäumen durchgeführt werden. Dieser Vergleich kann, zusätzlich zu dem erfindungsgemäßen Vergleich von dem Funktionsaufruf zugeordneten Variablenzugriffen, als ein weiteres Kriterium zur Identifikation des Funktionsaufrufs verwendet werden. Insbesondere sind in dieser Ausgestaltung auch solche Funktionen für das Verfahren zugänglich, die keine Variablenzugriffe enthalten, beispielsweise, weil ihr Code ausschließlich aus Funktionsaufrufen besteht.

In einer Weiterbildung wird mittels des Modellierungssystems eine der ersten Funktionen ausgewählt und der Funktionsaufruf der ausgewählten ersten Funktion deaktiviert und / oder die erste Funktion durch eine zweite Funktion ersetzt. Insbesondere wird mittels des Modellierungssystems und des Beeinflussungsgeräts der Programmcode einer der ausgewählten ersten Funktionen oder mehrerer der ausgewählten ersten Funktionen durch den Programmcode einer zweiten Funktion oder von mehreren der zweiten Funktionen überschrieben.

In einer Ausgestaltung weist das Modellierungssystem eine zweite Speichereinheit auf, wobei die zweite Funktion in die zweite Speichereinheit gespeichert wird und bei der von der zweiten Funktion zu ersetzenden ersten Funktion werden wenigstens die Variablenzugriffe deaktiviert und oder die Variablen nachträglich überschrieben.

Vorzugsweise ist die zweite Zuordnungstabelle in Form einer ASAP2-Datei (auch ASAM MCD-2 MC oder A2L-Datei genannt) ausgebildet. Es sei angemerkt, dass es sich beim ASAP2-Format um ein im Automobilbereich standardisiertes Format zur technischen Beschreibung von Steuerprogrammen handelt. Insbesondere können ASAP2-Dateien eine Auflistung von Variablen mit zugeordneten Speicheradressen, eine Zuordnung von Variablen zu den einzelnen Funktionen sowie eine Zuordnung eines Baums von Funktionsaufrufen zu den einzelnen Funktionen enthalten.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und die lateralen und die vertikalen Erstreckungen sind nicht maßstäblich und weisen, sofern nicht anders angegeben auch keine ableitbaren geometrischen Relationen zueinander auf. Darin zeigt:
- Figur 1: eine Ansicht auf eine Anordnung zur Beeinflussung eines Steuerprogramms eines Steuergerätes,
- Figur 2: eine stark vereinfachte Ansicht auf den Aufbau des in einer ersten Speicher abgelegten Steuerprogramms,
- Figur 3: eine detaillierte Ansicht auf das Steuerprogramm und eine Ausführungsform des erfindungsgemäßen Verfahrens,
- Figur 4: eine detaillierte Ansicht auf die Beschreibung eines Unterprogramms im ASAP2-Format,

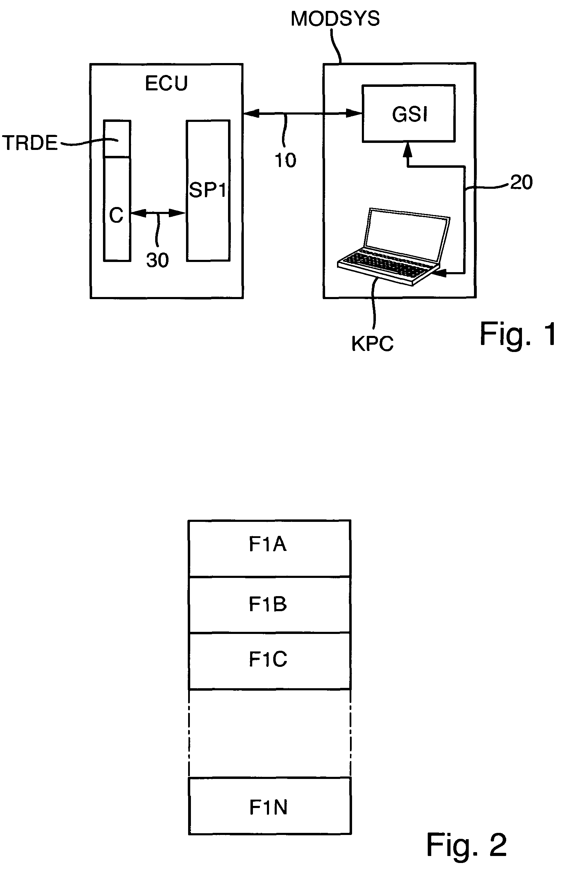

Die Abbildung der Figur 1 zeigt eine Ansicht auf eine Anordnung zur Beeinflussung eines Steuerprogramms STP, dargestellt in der Figur 2, eines Steuergerätes ECU. Das Steuergerät ECU weist einen ersten Speicher SP1 und einen Prozessor C mit einer mit dem Prozessor verbundenen Schnittstelle TRDE auf. Das Steuergerät ECU ist mittels einer Leitung 10 mit einem Modellierungssystem MODSYS verschaltet, wobei das Modellierungssystems MODSYS außerhalb des Steuergerätes ECU ausgebildet ist. Das Modellierungssystems MODSYS umfasst eine Anzeigeeinheit KPC und ein Beeinflussungsgerät GSI. Die Anzeigeeinheit KPC ist mit dem Beeinflussungsgerät GSI mittels einer Leitung 20 verschaltet. Es versteht sich, dass das Steuerprogramm STP als Binärcode bzw. als Hexcode vorliegt.

In der Abbildung der Figur 2 ist der Aufbau des in dem Speicher SP1 abgelegten Steuerprogramms STP dargestellt. Das Steuerprogramm STP weist eine Vielzahl von ersten Funktionen F1A, F1B, F1C, ...F1N auf. Es sei angemerkt, dass die ersten Funktionen F1A, F1B, F1C, ...F1N im Allgemeinen in Form von Unterprogrammen vorliegen.

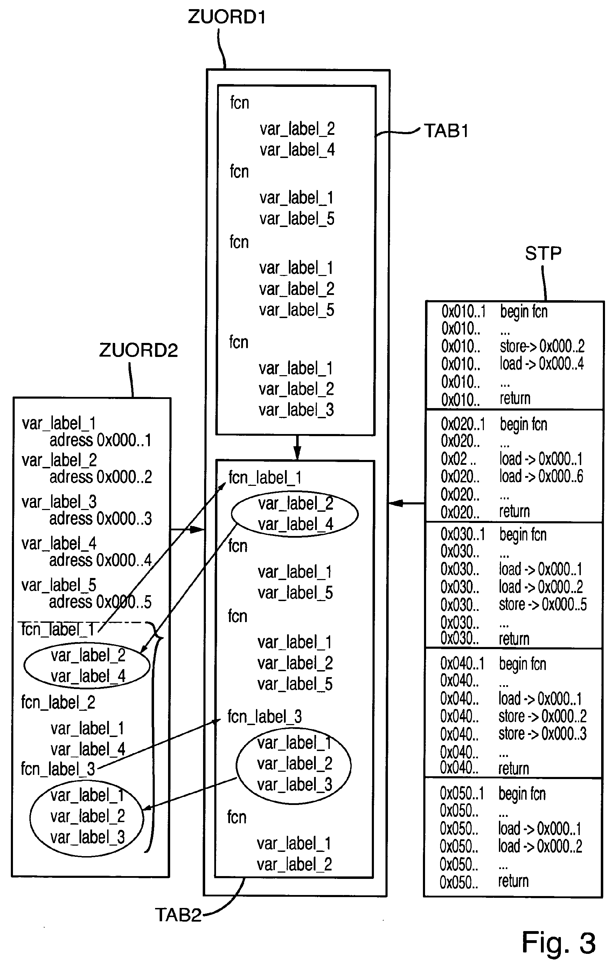

In der Abbildung der Figur 3 ist eine detaillierte Ansicht auf den Aufbau des Steuerprogramms STP und eine Ausführungsform des erfindungsgemäßen Verfahrens dargestellt. Das Steuerprogramm STP umfasst die Vielzahl von Unterprogrammen bzw. den Unterprogrammen zugeordneten ersten Funktionen F1A, F1B, F1C, ...F1N, in der Abbildung kollektiv mit fcn bezeichnet. Jede der ersten Funktionen F1A, F1B, F1C, ...F1N beginnt mit einem ersten Befehl und weist am Ende der jeweiligen ersten Funktion F1A, F1B, F1C, ...F1N einen Rücksprungbefehl return auf. Es versteht sich hierbei, dass bei der Abarbeitung bzw. Ausführung des Steuerprogramms STP bei einem Aufruf für die jeweilige erste Funktion F1A, F1B, F1C, ...F1N eine Sprungadresse vorliegt und die Sprungadresse auf eine Speicheradresse des mit dem Funktionsaufruf verbundenen Unterprogramms zeigt. In der Speicheradresse, auf die der Sprungbefehl zeigt, ist ein erster Befehl begin fcn hinterlegt. Die Unterprogramme liegen als eine Abfolge von binärem Programmcode vor. An dem Ende der Abfolge des Programmcodes des jeweiligen Unterprogramms liegt jeweils der Rücksprungbefehl return vor, mit einer dem Rücksprungbefehl return zugeordneten Rücksprungadresse.

Des Weiteren umfassen die Unterprogramme bzw. die dargestellten ersten Funktionen F1A, F1B, F1C, ...F1N jeweils eine erste Anzahl von Variablenzugriffen. Hierbei sind vorliegend zwei Arten von Variablenzugriffen dargestellt, die einen Schreibzugriff bewirkenden Schreibbefehle store und die einen Lesezugriff bewirkenden Lesebefehle load, d.h. jedem Variablenzugriff ist eine Speicheradresse zugeordnet. Die Schreibefehle store und die Lesebefehle load verweisen also auf bestimmte Speicheradressen des Speichers SP1. Mit den Schreibbefehlen store und Lesebefehlen load werden folglich die Werte von den Variablen in bestimmte Speicherzellen geschrieben oder aus bestimmten Speicherzellen gelesen.
Des Weiteren sind eine erste Zuordnungstabelle ZUORD1, mit einer ersten Tabelle TAB1 und einer zweiten Tabelle TAB2, und eine zweite Zuordnungstabelle ZUORD2 dargestellt. Die Tabellen TAB1 und TAB2 repräsentieren zwei unterschiedliche Bearbeitungsstadien der ersten Zuordnungstabelle ZUORD1. Die erste Tabelle TAB1 repräsentiert ein Stadium von ZUORD1 nach Abschluss eines Verfahrensschritts, und die zweite Tabelle TAB2 repräsentiert die fertige erste Zuordnungstabelle ZUORD1 nach Abschluss eines anderen, späteren Verfahrensschritts. Die zweite Zuordnungstabelle ZUORD2 ist eine vorgegebene Tabelle und enthält insbesondere eine Auflistung der Variablen des Steuerprogramms STP mit zugehörigen Speicheradressen und eine Zuordnung der Variablen zu den einzelnen Funktionen des Steuerprogramms STP. In einer vorteilhaften Ausführung ist sie ausgestaltet in Form einer Steuergerätebeschreibungsdatei, insbesondere in Form einer ASAP2-Datei. Die Ergebnisse aus der Untersuchung des Steuerprogramms STP werden in der ersten Zuordnungstabelle ZUORD1 gespeichert und mit dem Inhalt der zweiten Zuordnungstabelle ZUORD2 abgeglichen.

In einem ersten Verfahrensschritt wird der Programmcode des Steuerprogramms STP auf das Auftreten von Funktionsaufrufen untersucht und die mit den Funktionsaufrufen verbunden Sprungadressen und Rücksprungadressen sowie die mit den jeweiligen ersten Funktionen F1A, F1B, F1C, ...F1N verbundenen Variablen mit den jeweiligen Speicheradressen der Variablen ermittelt. Dazu werden einem ermittelten Funktionsaufruf alle Variablenzugriffe zugeordnet, die in der Abfolge des Steuerprogramms nach dem Funktionsaufruf, aber vor dem dem Funktionsaufruf zugeordneten Rücksprungsbefehl erfolgen. Das Ergebnis einer derartigen, dem Fachmann auch als Programmparsing bekannten Analyse ist eine Beschreibung des Steuerprogramms STP wie in der Figur 3 dargestellt. Sie enthält im Idealfall, d.h. nach einer fehlerfrei durchgeführten Analyse, eine Auflistung aller ersten Funktionen F1A, F1B, F1C, ...F1N des Steuerprogramms STP mit jeweils zugehörigen Funktionsadressen (d.h. den Speicheradressen des jeweils ersten der Funktion zugehörigen Programmbefehls), zu jeder Funktion die Speicheradresse des zugehörigen Rücksprungbefehls und eine Auflistung der aus der Funktion heraus erfolgten Schreib- und Lesezugriffe auf Variablen mit den jeweiligen Speicheradressen der Variablen.

In einem zweiten Verfahrensschritt werden durch einen ersten Vergleich mit der zweiten Zuordnungstabelle ZUORD2 den Speicheradressen der Variablen die Namen der Variablen zugeordnet und die Ergebnisse dieses ersten Vergleichs in die erste Zuordnungstabelle ZUORD1 eingetragen. Das Resultat ist die vorläufige Zuordnungstabelle TAB1, die den Programmfunktionen, zu diesem Zeitpunkt noch nicht identifiziert, jeweils eine Variablensignatur zuordnet.

In einer Ausgestaltung des Verfahrens werden bei der Untersuchung des Programmcodes einer bestimmten Funktion nicht nur solche Variablenzugriffe zugeordnet, die unmittelbar aus der Funktion heraus erfolgen, sondern auch solche, die aus Unterfunktionen der Funktion erfolgen, wobei beide genannten Arten von Variablenzugriffen, die aus der bestimmten Funktion heraus erfolgenden und die aus einer beliebigen Unterfunktion der bestimmten Funktion heraus erfolgenden, gleichberechtigt in der vorläufigen Zuordnungstabelle TAB1 eingetragen werden. Unter einer Unterfunktion einer gegebenen Funktion wird erfindungsgemäß eine Funktion des Steuerprogramms verstanden, die unmittelbar oder mittelbar anhand einer Abfolge von Funktionsaufrufen aus der gegebenen Funktion heraus aufgerufen wird. Diese Ausgestaltung des Verfahrens kann vorteilhaft sein. Insbesondere, wenn die gegebene zweite Zuordnungstabelle ZUORD2 derart beschaffen ist, dass sie Variablenzugriffe aus Unterfunktionen einer gegebenen Funktion zuordnet, muss auch die Zuordnung in der ersten Zuordnungstabelle ZUORD1 entsprechend durchgeführt werden, damit das Verfahren zuverlässig funktioniert.

In einem dritten Verfahrensschritt wird die Variablensignatur wenigstens eines Teils der Funktionen aus der ersten Tabelle TAB1 mit den Funktionsbeschreibungen in der zweiten Tabelle ZUORD2 verglichen und auf diese Weise dem wenigstens einen Teil der ersten Funktionen F1A, F1B, F1C, ...F1N jeweils ein Funktionsname zugeordnet, bevorzugt jeweils der Name der Funktion mit der größten Übereinstimmung mit der Variablensignatur. Beispielhaft sind in der Abbildung zwei Funktionsnamen, fcn_label_1 und fcn_label_3, anhand ihrer Variablensignatur ihren zugehörigen ersten Funktionen zugeordnet. Das Ergebnis ist die fertige Zuordnungstabelle TAB2. Von allen Funktionen, denen ein Funktionsname zugeordnet wird, sind dem Anwender im folgenden Namen und Speicheradressen bekannt, was ihn in die Lage versetzt, an diesen Funktionen Veränderungen vorzunehmen.

In einem nicht dargestellten vierten Verfahrensschritt wird wenigstens der erste Wert einer der Variablen durch einen zweiten Wert ersetzt, beispielsweise derart, dass einer Funktion F1X, die für die Steuerung eines Aktuators ausgebildet ist, ein Funktionsname zugeordnet wird und die Funktion F1X anhand der auf diese Weise erhaltenen Adressinformation deaktiviert und durch eine zweite Funktion F2X ersetzt wird, wobei F2X für die Steuerung desselben Aktuators ausgebildet ist, aber eine im Vergleich zu F1X unterschiedliche Vorschrift zur Beschreibung einer Variablen enthält, die durch ihren Wert das Verhalten des Aktuators beeinflusst.

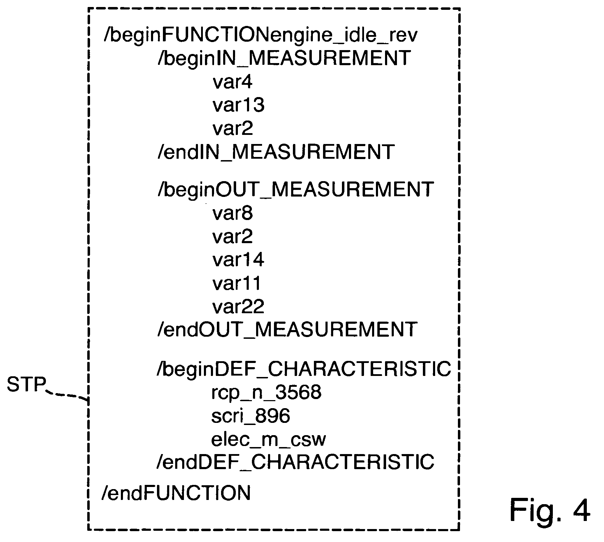

In der Abbildung der Figur 4 ist eine detaillierte Ansicht auf die beispielhafte Beschreibung eines Unterprogramms "engine_idle_rev" gemäß dem ASAP2-Format dargestellt. In der ersten Zeile des Beschreibungsblocks wird der Funktionsname, der mit dem Unterprogramm verknüpft ist, aufgeführt. Der erste Unterblock IN_MEASUREMENT enthält eine Auflistung aller durch das Unterprogramm eingelesenen Variablen, der zweite Unterblock OUT_MEASUREMENT eine Auflistung aller durch das Unterprogramm beschriebenen Variablen. In der Figur nicht dargestellt, aber in der ASAP2-Datei enthalten ist zudem eine Zuordnung aller Variablen zu ihren jeweiligen Speicheradressen. Diese aus der ASAP2-Datei auslesbaren Informationen bilden in einer vorteilhaften Ausgestaltung die Basis für die zweite Zuordnungstabelle ZUORD2.

Die ASAP2-Datei kann auch für jede beschriebene Programmfunktion eine Auflistung aller aus der Funktion heraus aufgerufenen Funktionen enthalten, insbesondere in Form eines Funktionsbaum. Sofern die Adressen zumindest eines Teils dieser Funktionen bereits identifiziert sind, können sie in einer vorteilhaften Ausgestaltung des Verfahrens als ein weiteres Kriterium zur Identifikation einer Funktion verwendet werden. Dazu werden in der vorläufigen Zuordnungstabelle TAB1 zu jeder im Programmcode gefundenen Funktion zusätzlich die aus der jeweiligen Funktion heraus erfolgenden Funktionsaufrufe mit den zugehörigen Funktionsadressen eingetragen. Nach der Identifikation der im Programmcode gefundenen Funktionen gemäß dem dritten Verfahrensschritt werden in einem vierten Verfahrensschritt durch einen Vergleich mit der Tabelle TAB2 den Funktionsaufrufen Funktionsnamen zugeordnet und das Ergebnis in einer Tabelle TAB3 gespeichert.

TAB3 ordnet also allen identifizierten Funktionen im Programmcode eine Signatur von Funktionsaufrufen zu, die in einem fünften Verfahrensschritt mit den entsprechenden Funktionsbeschreibungen in ZUORD2 verglichen werden können. In einer vorteilhaften Ausgestaltung werden die Ergebnisse dieses letzten Vergleichs verwendet, um die Richtigkeit der Zuordnungsergebnisse aus dem dritten Verfahrensschritt zu überprüfen. In einer weiteren vorteilhaften Ausgestaltung werden die Ergebnisse dieses letzten Vergleichs verwendet, um Programmfunktionen, die keine Variablenzugriffe enthalten, Funktionsnamen zuzuordnen. In einem sechsten Verfahrensschritt wird wenigstens der erste Wert einer der Variablen durch einen zweiten Wert ersetzt, insbesondere einer Variablen, die das Verhalten eines Aktuators beeinflusst.

Die ASAP2-Datei kann weitere, für das erfindungsgemäße Verfahren nicht benötigte Information enthalten, beispielsweise, wie in der Abbildung gezeigt, einen Unterblock DEF CHARACTERISTIC mit einer Auflistung von durch das Unterprogramm deklarierten Kalibrierparametern. Es ist vorteilhaft, in der ersten Zuordnungstabelle ZUORD1 Schreibzugriffe und Lesezugriffe auf Variablen und in der zweiten Zuordnungstabelle ZUORD2 die Datenrichtung der Variablennutzung (Lesen oder Schreiben bzw. IN_MEASUREMENT und OUT_MEASUREMENT) getrennt zu erfassen, weil die Wahrscheinlichkeit einer hohen Übereinstimmung im dritten Verfahrensschritt dadurch erhöht wird.

## Patentansprüche

1. Verfahren zur Beeinflussung eines Steuerprogramms (STP) eines Steuergerätes (ECU), wobei das Steuerprogramm (STP) eine Vielzahl von ersten Funktionen (F1A, F1B, F1C, ...F1N) und den ersten Funktionen (F1A, F1B, F1C, ...F1N) zugeordneten Unterprogrammen aufweist und wenigstens eine der ersten Funktionen (F1A, F1B, F1C, ...F1N) für die Steuerung eines Aktuators ausgebildet ist, und das Steuergerät (ECU) einen ersten Speicher (SP1) zur Aufnahme des Steuerprogramms (STP) aufweist,
das Steuerprogramm (STP) als ein binärer Programmcode vorliegt, wobei in dem Programmcode des Steuerprogramms (STP) bei dem Aufruf von einer der ersten Funktionen (F1A, F1B, F1C, ...F1N) eine Sprungadresse vorliegt und die Sprungadresse auf eine Speicheradresse der mit dem Funktionsaufruf verbundenen ersten Funktion zeigt und die erste Funktion als eine Abfolge von binärem Programmcode vorliegt und an dem Ende der Abfolge des Programmcodes des Unterprogramms ein Rücksprungbefehl mit einer dem Rücksprungbefehl zugeordneten Rücksprungadresse vorliegt, und
die Abfolge des Programmcodes der ersten Funktion eine erste Anzahl von Variablenzugriffen enthält und jedem Variablenzugriff eine Speicheradresse zugeordnet ist, und mindestens einer Variablen ein Name und ein erster Wert zugeordnet wird,
**dadurch gekennzeichnet, dass**
der Programmcode des Steuerprogramms (STP) untersucht wird und die mit den im Programmcode des Steuerprogramms (STP) enthaltenen Funktionsaufrufen verbunden Sprungadressen sowie die mit den jeweiligen ersten Funktionen (F1A, F1B, F1C, ...F1N) verbundenen Variablen mit den jeweiligen Speicheradressen der Variablen ermittelt werden und die ermittelten ersten Funktionen (F1A, F1B, F1C, ...F1N) und den jeweiligen ersten Funktionen (F1A, F1B, F1C, ...F1N) zugeordnete Variablen mit den verbundenen Speicheradressen in einer ersten Zuordnungstabelle (ZUORD1) gespeichert werden, und aus einem Vergleich der ersten Zuordnungstabelle (ZUORD1) mit einer zweiten vorgegeben Zuordnungstabelle (ZUORD2) wenigstens einem Teil der ersten Funktionen (F1A, F1B, F1C, ...F1N) Funktionsnamen zugeordnet werden und wenigstens ein erster Wert einer der Variablen durch einen zweiten Wert ersetzt wird.

2. Verfahren nach Anspruch 1, **dadurch gekennzeichnet, dass** bei der Untersuchung des Programmcodes des Steuerprogramms (STP) bei den jeweiligen Variablen jeweils ein zugeordneter Lesezugriff oder ein zugeordneter Schreibzugriff ermittelt und in die erste Zuordnungstabelle (ZUORD1) gespeichert und bei dem Vergleich die Übereinstimmung der den Variablen zugeordneten Lesezugriffe und Schreibzugriffe untersucht wird.

3. Verfahren nach Anspruch 1 oder Anspruch 2, **dadurch gekennzeichnet, dass** in der zweiten Zuordnungstabelle (ZUORD2) zumindest einem Teil der ersten Funktionen (F1A, F1B, F1C, ...F1N) jeweils ein Funktionsname und eine Anzahl von Variablen zugeordnet sind und jeder der Variablen eine Speicheradresse zugeordnet ist.

4. Verfahren nach einem der vorangegangenen Ansprüche, **dadurch gekennzeichnet, dass** bei dem Vergleich für die in der ersten Zuordnungstabelle (ZUORD1) abgespeicherten ersten Funktionen (F1A, F1B, F1C, ...F1N) Funktionsnamen in Abhängigkeit des Grades der Übereinstimmung wenigstens hinsichtlich der Anzahl und Adressen der in beiden Zuordnungstabellen unter der jeweilig ersten Funktion (F1A, F1B, F1C, ...F1N) abgespeicherten Variablen zugewiesen werden.

5. Verfahren nach Anspruch 4, **dadurch gekennzeichnet, dass** die Zuweisung der Funktionsnamen nur bei vollständiger Übereinstimmung automatisch durchgeführt wird.

6. Verfahren nach Anspruch 4, **dadurch gekennzeichnet, dass** vor der Zuweisung eines Funktionsnamen zu einer der ersten Funktionen (F1A, F1B, F1C, ...F1N) der ersten Zuordnungstabelle (ZUORD1) eine manuelle Zuweisung durchgeführt wird, wenn bei dem Vergleich der Grad der Übereinstimmung unterhalb eines Schwellenwertes liegt.

7. Verfahren nach Anspruch 4 oder Anspruch 6, **dadurch gekennzeichnet, dass** nur dann eine automatische Zuweisung durchgeführt wird, wenn bei dem Vergleich der Grad der Übereinstimmung einen Schwellenwert übersteigt, insbesondere, dass nur dann eine automatische Zuweisung durchgeführt wird, wenn bei dem Vergleich der Grad der Übereinstimmung der Funktion einen ersten Schwellenwert übersteigt und gleichzeitig der Grad der Übereinstimmung der nächstbestübereinstimmenden Funktion unterhalb eines zweiten Schwellenwertes liegt.

8. Verfahren nach Anspruch 5 oder Anspruch 6, **dadurch gekennzeichnet, dass** mittels eines Modellierungssystems (MODSYS) eine Nachricht ausgegeben wird, wenn für keine der ersten Funktionen (F1A, F1B, F1C, ...F1N) der Grad der Übereinstimmung einem Schwellenwert entspricht oder diesen übersteigt.

9. Verfahren nach Anspruch 1, **dadurch gekennzeichnet, dass** mittels eines Modellierungssystems (MODSYS) eine der ersten Funktionen (F1A, F1B, F1C, ...F1N), der ein Funktionsname zugeordnet wurde, ausgewählt und der Funktionsaufruf der ausgewählten ersten Funktion (F1A, F1B, F1C, ...F1N) deaktiviert und / oder die erste Funktion (F1A, F1B, F1C, ...F1N) durch eine zweite Funktion ersetzt wird.

10. Verfahren nach einem der vorangegangen Ansprüche, **dadurch gekennzeichnet, dass** die zweite Zuordnungsdatei (ZUORD2) in Form einer ASAP2-Datei ausgebildet ist.

11. Verfahren nach Anspruch 1, **dadurch gekennzeichnet, dass** der Programmcode des Steuerprogramms (STP) auf das Auftreten von Funktionsaufrufen untersucht wird.

12. Verfahren nach Anspruch 1, **dadurch gekennzeichnet, dass** einer gegebenen ersten Funktion alle Variablen zugeordnet werden, auf die in der Abfolge des Steuerprogramms (STP) nach dem Aufruf der gegebenen ersten Funktion, aber vor der Ausführung des der gegebenen ersten Funktion zugeordneten Rücksprungbefehls zugegriffen wird.

13. Verfahren nach Anspruch 1, **dadurch gekennzeichnet, dass** einer gegebenen ersten Funktion alle Variablen zugeordnet werden, auf die in der Abfolge des Steuerprogramms (STP) nach dem Aufruf der gegebenen ersten Funktion, aber vor der Ausführung des der gegebenen ersten Funktion zugeordneten Rücksprungbefehls zugegriffen wird und auf die nicht aus einer Unterfunktion der gegebenen ersten Funktion heraus zugegriffen wird.

14. Verfahren nach Anspruch 1, **dadurch gekennzeichnet, dass** ein erster Wert einer Variablen, deren Wert das Verhalten eines Aktuators beeinflusst, durch einen zweiten Wert ersetzt wird.

15. Verfahren nach einem der vorangegangenen Ansprüche, **dadurch gekennzeichnet, dass** in der zweiten Zuordnungstabelle (ZUORD2) zumindest einem Teil der ersten Funktionen (F1A, F1B, F1C, ...F1N) eine Anzahl von Funktionsaufrufen zugeordnet ist, wobei jeder zugeordnete Funktionsaufruf einer aus der jeweiligen ersten Funktion (F1A, F1B, F1C, ...F1N) heraus aufgerufenen Unterfunktion entspricht, und dass bei der Untersuchung des Programmcodes des Steuerprogramms (STP) aus einer ersten Funktion heraus erfolgende Aufrufe von Unterfunktionen mit den jeweiligen Funktionsadressen der Unterfunktionen ermittelt werden und zumindest einem Teil der ermittelten aufgerufenen Unterfunktionen anhand des erfindungsgemäßen Verfahrens Funktionsnamen zugeordnet werden, die ermittelten Aufrufe von Unterfunktionen mit den zugeordneten Funktionsnamen gespeichert werden, insbesondere in der ersten Zuordnungstabelle (ZUORD1) gespeichert werden, und aus einem Vergleich mit den zugeordneten Funktionsnamen in der zweiten Zuordnungstabelle (ZUORD2) zumindest einer weiteren ersten Funktion ein Funktionsname zugeordnet und/oder zumindest eine bereits durchgeführte Zuweisung eines Funktionsnamens auf Richtigkeit überprüft wird.

## Claims

1. A method for influencing a control program (STP) of a control device (ECU), the control program (STP) comprising a plurality of first functions (F1A, F1B, F1C, ...F1N) and subroutines associated with the first functions (F1A, F1B, F1C, ...F1N), and at least one of the first functions (F1A, F1B, F1C, ...F1N) being designed for controlling an actuator, and the control device (ECU) comprising a first memory (SP1) for receiving the control program (STP),
the control program (STP) being a binary program code, a jump address being present in the program code of the control program (STP) when one of the first functions (F1A, F1B, F1C, ...F1N) is called, and the jump address indicating a memory address of the first function connected with the function call, and the first function being a sequence of binary program code, and a return command having a return address associated with the return command being present at the end of the sequence of the program code of the subroutine, and
the sequence of the program code of the first function comprising a first number of variable accesses, and each variable access being associated with a memory address, and a name and a first value being associated with at least one variable ,
**characterized in that**
the program code of the control program (STP) is examined and the jump addresses connected with the function calls present in the program code of the control program (STP) and the variables connected with the corresponding first functions (F1A, FIB, F1C, ...F1N) are determined with the corresponding memory addresses of the variables, and the first functions (F1A, F1B, F1C, ...F1N) thus determined and the variables associated with the corresponding first functions (F1A, F1B, F1C, ...F1N) are stored with the connected memory addresses in a first association table (ZUORD1), and function names are associated with at least part of the first functions (F1A, F1B, F1C, ...F1N) from a comparison of the first association table (ZUORD1) with a second prescribed association table (ZUORD2), and at least one first value of one of the variables is replaced with a second value.

2. The method according to claim 1, **characterized in that** when the program code of the control program (STP) is examined, one associated read access or one associated write access is determined for the corresponding variables and stored in the first association table (ZUORD1), and the agreement of the read accesses and write accesses associated with the variables is examined in the comparison.

3. The method according to claim 1 or claim 2, **characterized in that** a function name and number of variables are associated with each of at least part of the first functions (F1A, F1B, F1C, ...F1N) in the second association table (ZUORD2) and a memory address is associated with each of the variables.

4. The method according to any one of the preceding claims, **characterized in that** for the comparison function names for the first functions (F1A, F1B, F1C, ...F1N) stored in the first association table (ZUORD1) are assigned on the basis of the degree of agreement at least with respect to the number and addresses of the variables stored in both association tables under each of the first functions (F1A, F1B, F1C, ... F1N) .

5. The method according to claim 4, **characterized in that** the assignment of function names is performed automatically only in case of complete agreement.

6. The method according to claim 4, **characterized in that** prior to assigning a function name to one of the first functions (F1A, F1B, F1C, ...F1N) of the first association table (ZUORD1), a manual assignment is performed if the level of agreement in the comparison is below a threshold value.

7. The method according to claim 4 or claim 6, **characterized in that** an automatic assignment is performed only if the level of agreement in the comparison exceeds a threshold value, particularly that an automatic assignment is performed only if the level of agreement of the function in the comparison exceeds a first threshold value while simultaneously the level of agreement of the function having the next best agreement is below a second threshold value.

8. The method according to claim 5 or claim 6, **characterized in that** a message is output by means of a modeling system (MODSYS) if the level of agreement does not correspond to or exceed a threshold value for any of the first functions (F1A, F1B, F1C, ... F1N) .

9. The method according to claim 1, **characterized in that** one of the first functions (F1A, F1B, F1C, ...F1N) associated with a function name is selected by means of a modeling system (MODSYS) and the function call of the selected first function (F1A, F1B, F1C, ...F1N) is deactivated and/or the first function (F1A, F1B, F1C, ...F1N) is replaced with a second function.

10. The method according to any one of the preceding claims, **characterized in that** the second associated table (ZUORD2) is implemented in the form of an ASAP2 file.

11. The method according to claim 1, **characterized in that** the program code of the control program (STP) is examined for the occurrence of function calls.

12. The method according to claim 1, **characterized in that** all variables accessed in the sequence of the control program (STP) after the call of the given first function but before the execution of the return command associated with the given first function are associated with the given first function.

13. The method according to claim 1, **characterized in that** all variables accessed in the sequence of the control program (STP) after the call of the given first function but before the execution of the return command associated with the given first function and not accessed from a subfunction of the given first function are associated with the given first function.

14. The method according to claim 1, **characterized in that** a first value of a variable whose value influences the behavior of an actuator is replaced by a second value.

15. The method according to any one of the preceding claims, **characterized in that** a number of function calls are associated with at least part of the first functions (F1A, F1B, F1C, ...fin) in the second association table (ZUORD2), wherein each associated function call corresponds to a subfunction called from the corresponding first function (F1A, F1B, F1C, ...F1N), and that when the program code of the control program (STP) is examined, calls of subfunctions from a first function are determined with the corresponding function addresses of the subfunctions and function names are associated with at least part of the called subfunctions thus determined using the method according to the invention, the calls of subfunctions thus determined are saved with the associated function names, particularly saved in the first association table (ZUORD1), and a function name is associated with at least one further first function and/or at least one previously performed assignment of a function name is checked for correctness from a comparison with the associated function names in the second association table (ZUORD2).

## Revendications

1. Procédé pour influencer un programme de commande (STP) d'un appareil de commande (ECU), dans lequel le programme de commande (STP) présente une multitude de premières fonctions (F1A, F1B, F1C, ...F1N) et de sous-programmes (F1A, F1B, F1C, ... F1N) attribués aux premières fonctions et au moins l'une des premières fonctions (F1A, F1B, F1C, ... F1N) se présentant sous une forme permettant la commande d'un actionneur, et l' appareil de commande (ECU) présente une première mémoire (SP1) pour accueillir le programme de commande (STP),
le programme de commande (STP) est présent en tant que code de programme binaire, sachant que dans le code de programme du programme de commande (STP), une adresse de saut est disponible à l'appel de l'une des premières fonctions (F1A, F1B, F1C, ... F1N) et l'adresse de saut pointe sur une adresse en mémoire de la première fonction liée à l'appel de fonction et la première fonction est présente en tant que séquence du code de programme binaire et à la fin de la séquence du code de programme du sous-programme, une instruction de saut retour est disponible avec une adresse de saut retour attribuée à l'instruction de saut retour, et
la séquence du code de programme de la première fonction contient un premier nombre d'accès aux variables, une adresse en mémoire est attribuée à chaque accès à une variable et un nom et une première valeur sont attribués à au moins une variable,
**caractérisé en ce que**
le code de programme du programme de commande (STP) est analysé et les adresses de saut liées aux appels de fonction contenus dans le code de programme du programme de commande ainsi que les variables liées aux premières fonctions (F1A, F1B, F1C, ...F1N) respectives sont déterminées avec les adresses en mémoire respectives des variables et les premières fonctions (F1A, F1B, F1C, ... F1N) déterminées et les variables attribuées aux premières fonctions respectives (F1A, F1B, F1C, ...F1N) sont mémorisées dans une première table de correspondance (ZUORD1) avec les adresses en mémoire liées, et sur la base d'une comparaison de la première table de correspondance (ZUORD1) avec une seconde table de correspondance (ZUORD2) allouée, des noms de fonction sont attribués à au moins une partie des premières fonctions (F1A, F1B, F1C, ...F1N) et au moins une première valeur de l'une des variables est remplacée par une seconde valeur.

2. Procédé selon la revendication 1, **caractérisé en ce que** lors de l'analyse du code de programme du programme de commande (STP), un accès en lecture attribué ou un accès en écriture attribué sont respectivement déterminés aux différentes variables et mémorisés dans la première table de correspondance (ZUORD1) et, lors de la comparaison, la concordance des accès en lecture et des accès en écriture attribués aux variables est analysée.

3. Procédé selon la revendication 1 ou la revendication 2, **caractérisé en ce que** dans la deuxième table de correspondance (ZUORD2), un nom de fonction et un nombre de variables sont attribués à au moins une partie des premières fonctions (F1A, F1B, F1C, ...F1N) et une adresse en mémoire est attribuée à chacune des variables.

4. Procédé selon l'une des revendications précédentes, **caractérisé en ce que** lors de la comparaison, des noms de fonction sont attribués pour les premières fonctions (F1A, F1B, F1C, ...F1N) mémorisées dans la première table de correspondance (ZUORD1) en fonction du degré de concordance au moins en ce qui concerne le nombre et les adresses des variables mémorisées dans les deux tables de correspondance sous les premières fonctions (F1A, F1B, F1C, ...F1N) respectives.

5. Procédé selon la revendication 4, **caractérisé en ce que** l'attribution des noms de fonction est effectuée automatiquement seulement en cas de concordance totale.

6. Procédé selon la revendication 4, **caractérisé en ce qu'**avant l'attribution d'un nom de fonction à l'une des premières fonctions (F1A, F1B, F1C, ...F1N) de la première table de correspondance (ZUORD1), une attribution manuelle est effectuée si, lors de la comparaison, le degré de concordance est inférieur à une valeur seuil.

7. Procédé selon la revendication 4 ou la revendication 6, **caractérisé en ce qu'**une attribution automatique n'est effectuée que si, lors de la comparaison, le degré de concordance est supérieur à une valeur seuil, en particulier qu'une attribution n'est effectué que si, lors de la comparaison, le degré de concordance de la fonction est supérieur à une première valeur seuil et, en même temps, le degré de concordance de la prochaine fonction concordant le mieux est inférieur à une seconde valeur seuil.

8. Procédé selon la revendication 5 ou la revendication 6, **caractérisé en ce qu'**un message est émis à l'aide d'un système de modélisation (MODSYS) si le degré de concordance ne correspond à aucune valeur seuil ou n'est supérieur à cette dernière pour aucune des premières fonctions (F1A, F1B, F1C, ... F1N).

9. Procédé selon la revendication 1, **caractérisé en ce qu'**à l'aide d'un système de modélisation (MODSYS), l'une des premières fonctions (F1A, F1B, F1C, ...F1N), à laquelle a été attribué un nom de fonction, est sélectionnée et l'appel de fonction de ladite première fonction (F1A, FIB, F1C, ...F1N) sélectionnée est désactivé et/ou la première fonction (F1A, F1B, F1C, ...F1N) est remplacée par une seconde fonction.

10. Procédé selon l'une des revendications précédentes, **caractérisé en ce que** le second fichier de correspondance (ZUORD2) se présente sous la forme d'un fichier ASAP2.

11. Procédé selon la revendication 1, **caractérisé en ce que** le code de programme du programme de commande (STP) est analysé en termes d'occurrence d'appels de fonction.

12. Procédé selon la revendication 1, **caractérisé en ce que** toutes les variables, auxquelles a lieu un accès dans la séquence du programme de commande (STP) après l'appel de la première fonction donnée, mais avant l'exécution de l'instruction de saut retour attribuée à la première fonction donnée, sont attribuées à une première fonction donnée.

13. Procédé selon la revendication 1, **caractérisé en ce que** toutes les variables, auxquelles a lieu un accès dans la séquence du programme de commande (STP) après l'appel de la première fonction donnée, mais avant l'exécution de l'instruction de saut retour attribuée à la première fonction donnée et auxquelles aucun accès n'a lieu depuis une sous-fonction de la première fonction donnée, sont attribuées à une première fonction donnée.

14. Procédé selon la revendication 1, **caractérisé en ce qu'**une première valeur d'une variable, dont la valeur influence le comportement d'un actionneur, est remplacée par une seconde valeur.

15. Procédé selon l'une des revendications précédentes, **caractérisé en ce que** dans la seconde table de correspondance (ZUORD2), un nombre d'appels de fonctions est attribué à au moins une partie des premières fonctions (F1A, F1B, F1C, ...F1N), sachant que chaque appel de fonction attribué correspond à une sous-fonction appelée depuis la première fonction (F1A, F1B, F1C, ...F1N) respective, et que lors de l'analyse du code de programme du programme de commande (STP), les appels de sous-fonctions intervenant depuis une première fonction avec les adresses de fonctions respectives des sous-fonctions sont déterminés et des noms de fonctions sont attribués au moins à une partie des sous-fonctions appelées déterminées sur la base du procédé de la présente invention, les appels de sous-fonctions déterminés sont mémorisés avec les noms de fonction attribués, en particulier, sont mémorisés dans la première table de correspondance (ZUORD1), et sur la base d'une comparaison avec les noms de fonction attribués dans la seconde table de correspondance (ZUORD2), un nom de fonction est attribué à au moins une première fonction supplémentaire et/ou au moins une attribution de nom de fonction déjà effectuée est vérifiée en termes d'exactitude.
